# EUROPÄISCHE PATENTSCHRIFT

(11) **EP 0 504 906 B1**
(45) Veröffentlichungstag und Bekanntmachung des Hinweises auf die Patenterteilung: **25.01.1995**
(21) Anmeldenummer: 92104825.2
(22) Anmeldetag: 19.03.1992
(51) Int. Cl.: B60K 23/02, F16D 25/06, B60K 17/02, F16J 15/56

(54) **Nehmerzylinder für eine hydraulische Betätigungsanlage einer Kraftfahrzeug-Reibungskupplung**
Slave cylinder of a hydraulic actuation device for a vehicle friction clutch
Cylindre récepteur pour le dispositif hydraulique de l'embrayage à friction d'un véhicule

(30) Priorität: 20.03.1991 DE 4109125
(43) Veröffentlichungstag der Anmeldung: 23.09.1992
(73) Patentinhaber: Fichtel & Sachs AG, D-97419 Schweinfurt (DE)
(72) Erfinder: Grosspietsch, Wolfgang, Dipl.-Ing. (FH), W-8720 Schweinfurt (DE); Mader, Gottfried, W-8729 Ebelsbach (DE); Voit, Herbert, Dipl.-Ing. (FH), W-8720 Schweinfurt (DE); Müller, Karl, Dipl.-Ing. (FH), W-8721 Poppenhausen (DE)
(74) Vertreter: Liska, Horst, Dr.-Ing.

(56) Entgegenhaltungen:
- EP-A- 0 363 788
- DE-A- 3 020 769
- DE-B- 2 330 750
- FR-A- 2 560 336
- GB-A- 2 112 490
- SOVIET INVENTIONS ILLUSTRATED, Sektion P,Q, Woche 8811, 27. April 1988, DERWENTPUBLICATIONS LTD., London, Q 66 Seite 9
- SOVIET INVENTIONS ILLUSTRATED, Sektion P,Q, Woche 8706, 25. MUrz 1987, DERWENTPUBLICATIONS LTD., London, Q 13 Seite 3

## Beschreibung

Die Erfindung betrifft einen Nehmerzylinder für eine hydraulische Betätigungsanlage einer Kraftfahrzeug-Reibungskupplung.

Hydraulische Betätigungsanlagen von Kraftfahrzeug-Reibungskupplungen müssen nach der Montage mit Hydraulikfluid gefüllt werden, wobei sichergestellt werden muß, daß im hydraulischen Kraftübertragungssystem zwischen Geberzylinder und Nehmerzylinder keine Luftblasen eingeschlossen sind. Da die nachträgliche Entlüftung des Systems zeitraubend ist, ist es insbesondere für die Serienmontage solcher hydraulischer Kraftübertragungssysteme bekannt, am Vorratsbehälter der hydraulischen Betätigungsanlage über ein Umschaltventil zwei Leitungen anzubringen, von denen eine mit einer Vakuumpumpe und die andere mit einer das Hydraulikfluid liefernden Druckpumpe verbunden ist. Mittels der Vakuumpumpe wird zunächst in der einen Stellung des Umschaltventils die Betätigungsanlage evakuiert. Danach wird durch Umschalten des Umschaltventils die Anlage mit Hydraulikfluid gefüllt. Der Füllvorgang kann auf diese Weise rasch durchgeführt werden, ohne daß Restluft in der Betätigungsanlage verbleibt.

Bei herkömmlichen hydraulischen Betätigungsanlagen wirkt der Nehmerzylinder über eine Ausrückgabel oder dergleichen auf ein Ausrücklager der Kupplung. Der Nehmerzylinder solcher Anlagen hat üblicherweise einen zylindrischen Kolben, der durch Ringdichtungen an seiner Umfangswand gegenüber einem rohrförmigen Zylinder abgedichtet ist. Die beispielsweise in Umfangsnuten des Kolbens geführten Ringdichtungen könenn sowohl die im Betrieb auftretenden Druckkräfte, als auch die beim Befüllen sich ergebenden Unterdruckkräfte aufnehmen. Da der Durchmesser des Kolbens vergleichweise klein ist, sind auch die in Betrieb auftretenden Reibungskräfte noch akzeptabel.

Anders liegen die Verhältnisse, wenn der Nehmerzylinder ringzylindrische Form hat, so daß er konzentrisch zur Getriebeeingangswelle angeordnet und unter Vermeidung einer Ausrückgabel oder dergleichen direkt mit dem Ausrücklager der Kupplung verbunden wird. Herkömmliche Nehmerzylinder dieser Art umfassen einen Ringzylinder mit einer äußeren Zylinderwand, einer zur äußeren Zylinderwand koaxialen inneren Zylinderwand und einer die Zylinderwände an einem Ende dicht verbindenden Stirnwand sowie einen zwischen der äußeren und der inneren Zylinderwand axial verschiebbar angeordneten Ringkolben und ferner einen mit radial elastischen, eine Ringnut zwischen sich einschließenden Dichtlippen sowohl an der äußeren als auch an der inneren Zylinderwand anliegenden, zusammen mit dem Ringkolben axial verschiebbaren Nut-Dichtring an dem der Stirnwand zugekehrten Ende des Ringkolbens, der zusammen mit den Zylinderwänden und der Stirnwand einen Hydraulik-Druckraum einschließt. In den Hydraulik-Druckraum mündet in üblicherweise ein Druckmittelanschluß. Bei einem Nehmerzylinder dieser Art hat der Nut-Dichtring einen vergleichsweisen großen Durchmesser, mit der Folge, daß der Radialdruck, mit dem die Dichtlippen aufgrund ihrer Eigenelastizität an den Zylinderwänden anliegen vergleichsweise gering gehalten werden muß, wenn die Reibkräfte zwischen Dichtring und Ringzylinder auf akzeptablen Werten bleiben sollen. Dieses Problem ist um so gravierender, als der Ringkolben sowohl nach radial innen als auch nach radial außen abgedichtet werden muß. Nut-Dichtringe der erläuterten Art könenn zwar Druckkräfte aufnehmen, jedoch nur in geringem Umfang gegen Unterdruck abdichten, da sie bei Unterdruck im Hydraulik-Druckraum von den Zylinderwänden abheben, so daß beim unterdruckunterstützem Befüllen die Betätigungsanlage nur unzureichend evakuiert werden kann.

Es ist Aufgabe der Erfindung einen Nehmerzylinder vom vorstehend erläuterten Ringzylinder zu schaffen, der nicht nur bei Hydraulik-Überdruck, sondern auch bei Luftunterdruck in seinem Hydraulik-Druckraum hinreichend dicht ist, so daß der Nehmerzylinder in hydraulischen Betätigungsanlagen von Kraftfahrzeug-Reibungskupplungen eingesetzt werden kann, bei welchen vor dem Befüllen mit Hydraulikfluid in dem Druckraum ein Unterdruck erzeugt wird. Hierbei soll jedoch sichergestellt werden, daß die dichtungsbedingten Reibkräfte im Betrieb klein bleiben.

Ausgehend von einem Nehmerzylinder der vorstehend erläuterten Art wird diese Aufgabe durch die für einen ersten Aspekt der Erfindung in Anspruch 1 und für einen zweiten Aspekt der Erfindung in Anspruch 7 angegebenen Merkmale gelöst.

Die Erfindung geht hierbei von der Überlegung aus, daß im normalen Betrieb des Nehmerzylinders bei der Betätiung der Reibungskupplungen die Dichtwirkung ausschließlich von den Dichtlippen erzeugt wird. Die Dichtlippen können deshalb so bemessen werden, daß sie im Normalbetrieb hinreichend kleine Reibungskräfte erzeugen. Der Druckraum ist lediglich vor dem Befüllen mit Hydraulikfluid einem Unterdruck ausgesetzt, so daß die zusätzlich zu den Dichtlippen vorgesehenen Mittel so konstruiert sein können, daß sie nur in diesem Betriebszustand die Dichtwirkung des Nut-Dichtrings erhöhen, die Dichtlippen also von Kräften, die sie von den Zylinderwänden abheben wollen, entlasten.

Unter dem ersten Aspekt oder Erfindung ist vorgesehen, daß der Ringzylinder im Bereich einer Endstellungen des Ringkolbens mit ringförmigen Anlageflächen versehen ist, an welchen die Dichtlippen in der Endstellung des Ringkolbens anliegen und die den Radialdruck mit dem die Dichtlippen an den Zylinderwänden anliegen, zur Erhöhung der Dichtwirkung der Dichtlippen erhöhen. Die Entlüftung der Betätigungsanlage erfolgt damit in einer festgelegten Endstellung des Ringkolbens, in der die Dichtlippen mechanisch über ihre Eigenelastizität hinaus für die Zeit, in welcher das Vakuum wirksam ist, gegen die Zylinderwände gespannt werden.

Bei den ringförmigen Anlageflächen handelt es sich zweckmäßigerweise um Konusflächen, die in einer ersten Variante an den Zylinderwänden vorgesehen sind oder in einer zweiten Variante durch einen in den Druckraum hineinreichenden, in der Endstellung des Kolbens zwischen die Dichtlippen eingreifenden Konusring gebildet werden. Es versteht sich, daß der Konusring einteilig an dem Ringzylinder angeformt sein kann, beispielsweise an dessen Stirnwand, aber auch als separat von den Zylinderwänden und der Stirnwand hergestelltes und in den Ringzylinder eingesetztes Bauteil ausgebildet sein kann.

Die Konusflächen sind bevorzugt im Bereich der Stirnwand des Ringzylinders vorgesehen, in deren Bereich auch der Druckmittelanschluß in den Druckraum mündet. Der Ringzylinder braucht auf diese Weise beim Befüllen der Betätigungsanlage mit Hydraulikfluid nur in seine eingeschobene Endstellung gebracht werden, in der auch das Zylindervolumen minimal ist, was das Evakuieren der Betätigungsanlage erleichtert. Zweckmäßigerweise ist der Nut-Dichtring axial lose am Ringkolben abgestützt, so daß der Ringkolben nicht während der gesamten Unterdruckphase gegen die Kraft der üblicherweise vorgesehenen, den Kolben in die ausgeschobene Stellung vorspannenden Rückholfeder festgehalten werden muß. Mit Beginn der Unterdruckphase hält der Unterdruck den losen Nut-Dichtring in der eingeschobenen Endstellung an den Anlageflächen fest.

Unter dem zweiten Aspekt der Erfindung wird eine Unterdruckentlastung der Dichtlippen des Nut-Dichtrings durch zusätzliche Dichtwulste erzielt, die im wesentlichen nur den Zweck haben, den bei Unterdruckbelastung im Druckraum von der Seite des Ringkolbens her auf den Dichtlippen lastenden Atmosphärendruck zu mindern. Hierzu ist vorgesehen, daß der Nut-Dichtring einen ringförmigen Grundkörper aufweist, von dem die Dichtlippen durch eine Ringnut voneinander getrennt zur Stirnwand des Ringzylinders abstehen, daß zur Erhöhung der Dichtwirkung der Dichtlippen bei an dem Hydraulik-Druckraum anliegendem Unterdruck zusätzlich zu den Dichtlippen vom Außemumfang und vom Innenumfang des Grundkörpers auf der von der Stirnwand des Ringzylinders abgewandten Seite je ein ringförmiger Dichtwulst radial zu der äußeren bzw. der inneren Zylinderwand absteht und der Grundkörper axial zwischen den Dichtwulsten und den Dichtlippen Ringspalte zwischen sich und den Zylinderwänden bildet. Um die Reibkräfte in beiden Verschieberichtungen des Ringkolbens gering zu halten, haben die Dichtwulste, gesehen in einer Axiallängsschnittebene des Nut-Dichtrings zweckmäßigerweise eine kreissektorförmige Querschnittskontur und bevorzugt ist vorgesehen, daß der Durchmesser jedes Dichtwulstes bei nicht in den Ringzylinder eingebautem Nut-Dichtring jeweils eine kleinere radiale Überdeckung mit dem Durchmesser der zur Anlage bestimmten Zylinderwand hat, als der Durchmesser der zur Anlage an der selben Zylinderwand bestimmten Dichtlippe. Mit anderen Worten, die Radialkraft, mit der der Dichtwulst an der Zylinderwand anliegt ist vergleichsweise klein und durch die kreissektorförmige Kontur wird der Gleiteffekt des Dichtwulsts verbessert. Zweckmäßigerweise ist vorgesehen, daß die zwischen dem Dichtwulst und der Dichtlippe jeweils vorgesehenen Ringspalte mit Schmiermittel gefüllt sind. Das Schmiermittel mindert einerseits die in Betrieb auftretenden Reibkräfte und erhöht andererseits beim Befüllen der Betätigungsanlage mit Hydraulikfluid die Dichtwirkung.

Im folgenden wird die Erfindung anhand einer Zeichnung näher erläutert. Hierbei zeigt:
- Figur 1: ein Prinzipbild einer herkömmlichen Kraftfahrzeug-Reibungskupplung mit hydraulischer Betätigungsanlage während der Befüllung mit Hydraulikfluid;
- Figur 2: einen Teilschnitt durch einen Nehmerzylinder vom Ringzylindertyp, der die Befüllung mit Hydraulikfluid in einem System gemäß Fig. 1 erlaubt;
- Figuren 3 und 4: Detaildarstellungen von Varianten des Nehmerzylinders nach Fig. 2 und
- Figur 5: ein Axiallängsschnitt durch eine Variante eines Nut-Dichtrings.

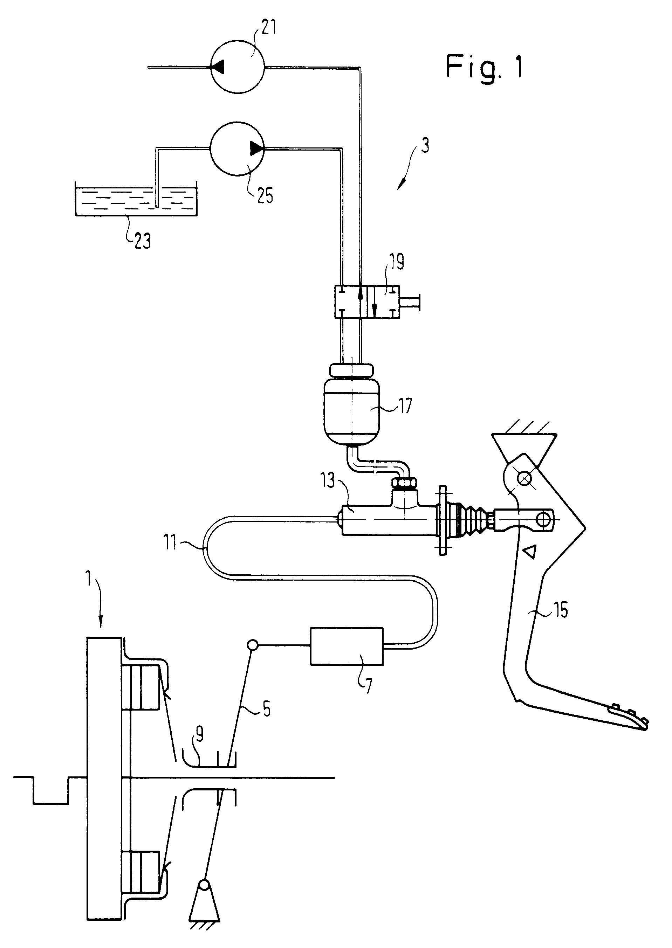

Fig. 1 zeigt in einer Prinzipdarstellung eine herkömmliche Betätigungsanlage für eine Kraftfahrzeug-Reibungskupplung 1 während der Befüllung mit Hydraulikfluid mittels einer Füllanlage 3. Der Kupplung 1 ist ein Ausrückhebel 5 zugeordnet, der in seinem einen Endbereich schwenkbar beispielsweise am nicht näher dargestellten Getriebegehäuse gelagert ist und an seinem anderen Ende von einem Nehmerzylinder 7 verstellt wird. In seinem mittleren Bereich wirkt der Ausrückhebel 5 auf ein Ausrücklager 9 der Kupplung 1. Der Nehmerzylinder 7 ist über eine Verbindungsleitung 11 mit einem Geberzylinder 13 verbunden, der mittels eines Kupplungspedals 15 betätigt wird. Der Geberzylinder 13 ist in üblicherweise mit einem Vorratsbehälter 17 für Hydraulikfluid verbunden.

Um die Betätigungsanlage ohne nachträgliche Entlüftungsmaßnahmen mit Hydraulikfluid füllen zu können, ist der Vorratsbehälter 17 über ein Umschaltventil 19 wechselweise mit einer Saugpumpe 21 und einer Hydraulikfluid aus einem Behälter 23 fördernden Druckpumpe 25 verbindbar. Zum Befüllen der Betätigungsanlage wird der Vorratsbehälter 17, der Geberzylinder 13, die Verbindungsleitung 11 und der Nehmerzylinder 7 mittels des Umschaltventils 19 an die Saugpumpe 21 angeschlossen, die in diesem System ein Vakuum erzeugt, während die von der Druckpumpe 25 zum Vorratsbehälter 17 führende Leitung gesperrt ist. Nachdem der Innenraum der Anlage evakuiert ist, wird die vom Vorratsbehälter 17 zur Saugpumpe 21 führende Leitung gesperrt und die Leitung zur Druckpumpe 25 freigegeben, womit der Innenraum der Betätigungsanlage rasch und restluftfrei mit Hydraulikfluid gefüllt wird. Herkömmliche Hydraulikfluid-Füllsysteme funktionieren jedoch lediglich dann, wenn die Dichtungen des Nehmerzylinders 7 sowohl bei Fluidüberdruck als auch bei Luft-Unterdruck im Druckraum des Nehmerzylinders 7 hinreichend dicht sind.

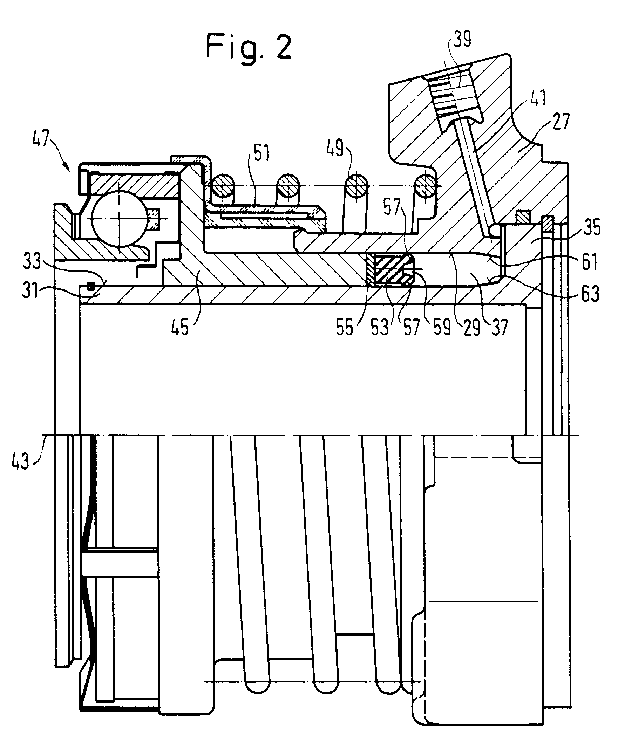

Fig. 2 zeigt einen erfindungsgemäßen Nehmerzylinder vom Ringtyp, der diesen Anforderungen genügt. Ein Nehmerzylinder dieser Art hat einen vergleichsweise großen Durchmesser und umschließt, in das Kraftfahrzeug eingebaut, die zur Kupplung führende Getriebeeingangswelle. Der Nehmerzylinder hat ein ringzylindrisches Gehäuse 27 mit einer äußeren Zylinderwand 29 und einem rohrförmigen Innenteil 31, welche eine innere Zylinderwand 33 bildet. Das Innenteil 31 trägt eine Stirnwand 35, die zusammen mit den Zylinderwänden 29, 33 einen Druckraum 37 für ein Hydraulikfluid begrenzt. Im Bereich der Stirnwand 35 mündet ein zu einem Druckanschluß 39 führender Druckmittelkanal 41.

Zwischen den zusammen mit der nicht dargestellten Getriebeeingangswelle zu einer Drehachse 43 konzentrischen Zylinderwänden 29, 33 ist ein Ringkolben 45 axial verschiebbar angeordnet, der an seinem, dem Druckraum 37 axial abgewandten Ende ein Ausrücklager 47 zur Betätigung der Reibungskupplung trägt. Eine Vorspannfeder 49 spannt den Ringkolben 45 in seine ausgeschobene Stellung vor. Eine am Ringkolben 45 gehaltene Abdeckung 51 verhindert das Eindringen von Schmutz in den Ringzylinder 45.

Der Ringzylinder 45 wird von einem Nut-Dichtring 53 zum Druckraum 37 hin abgedichtet. Der Nut-Dichtring 53 stützt sich über einen Stützring 55 lose an der zur Stirnwand 35 benachbarten Stirnfläche des Ringkolbens 45 ab. Auf der vom Ringkolben 45 axial abgewandten Seite ist der Dichtring 53 mit zwei ringförmigen Dichtlippen 57 versehen, von denen eine an der äußeren Zylinderwand 29 und die andere an der inneren Zylinderwand 33 aufgrund der Eigenelastizität des gummielastischen Dichtringmaterials anliegt. Radial zwischen den Dichtlippen 57 enthält der Dichtring 53 eine zum Druckraum 37 hin offene Ringnut 59, die sich im wesentlichen über die gesamte axiale Länge der Dichtlippen 57 erstreckt, um so eine vergleichsweise weiche Federungscharakteristik der Dichtlippen 57 und damit im Kupplungsbetätigungsbetrieb vergleichsweise geringe Reibungskräfte zu erreichen.

Um während des Befüllens der Betätigungsanlage mit Hydraulikfluid den Anpressdruck der Dichtlippen 57 zu erhöhen, ist die äußere Zylinderwand 29 im Bereich der den Druckraum 37 verschließenden Stirnwand 35 mit einer zur Stirnwand 35 hin sich verjüngenden Konusfläche 61 und die innere Zylinderwand 33 radial gegenüberliegend mit einer zur Stirnwand 35 hin sich erweiternden Konusfläche 63 versehen. Zum Befüllen der Anlage wird der Ringkolben 45 in seine eingeschobene Endstelllung gebracht, in der die Konusflächen 61, 63 den Anpressdruck der Dichtlippen 57 soweit erhöhen, daß ein für die Evakuierung ausreichendes Vakuum erzeugt werden kann. Der Ringkolben 45 kann während der Befüllphase in der eingeschobenen Endstellung gehalten werden; da die Ringdichtung 53 jedoch lose ist, genügt es, wenn der Ringkolben 45 den Nut-Dichtring nur bis zum Einsetzen der Saugwirkung in der eingeschobenen Stellung hält. Bei Einsetzen der Saugwirkung wird der Nut-Dichtring 53 vom Unterdruck festgehalten, so daß der Ringkolben 45 wieder freigegeben werden kann und unter der Kraft der Vorspannfeder 49 in seine ausgeschobene Endstellung zurückkehren kann. Der Nut-Dichtring 53 wird nachfolgend von dem unter Druck eingefüllten Hydraulikfluid ausgeschoben, bis er wieder an dem Stirnende des Ringkolbens 45 anliegt.

Im folgenden sollen Varianten des Nehmerzylinders erläutert werden. Gleichwirkende Komponenten sind hierbei mit den Bezugszahlen aus Fig. 2 bezeichnet. Zur Erläuterung des Aufbaus und der Wirkungsweise des Nehmerzylinders wird auf die Beschreibung der Fig. 2 Bezug genommen.

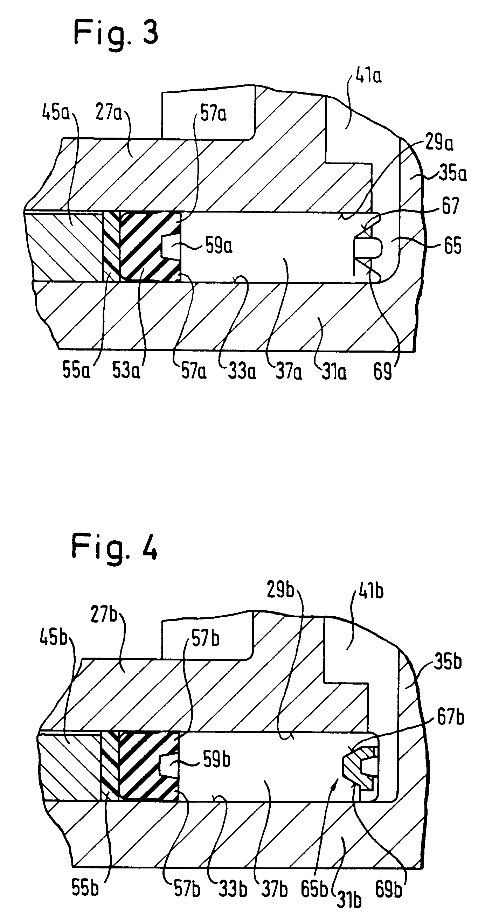

Fig. 3 zeigt Details einer ersten Variante des Nehmerzylinders aus dem Bereich seines Druckraums 37a. Im Unterschied zum Nehmerzylinder der Fig. 2 ist anstelle der Konusflächen 61, 63 der Zylinderwände 29, 33 an der Stirnwand 35a des Innenteils 31a ein Konusring 65 angeformt, der zwei zum Ringkolben 45a hin sich verjüngende ringförmige Konusflächen 67, 69 bildet. Die Konusflächen 67, 69 greifen in der eingeschobenen Endstellung des Ringkolbens 45a in die Ringnut 59a des Nut-Dichtrings 53a ein und zwängen die Dichtlippen 57a voneinander weg gegen die Zylinderwände 29a, 33a. Der Druckmittelkanal 41a mündet im Bereich des Konusrings 65.

Fig. 4 zeigt eine Variante des Nehmerzylinders nach Fig. 3, die sich von diesem Nehmerzylinder im wesentlichen nur dadurch unterscheidet, daß der Konusring 65b ein gesondert von dem Ringzylinder und insbesondere der Stirnwand 35b hergestelltes und in das Gehäuse 27b eingesetztes Bauteil ist. Die Konusflächen 67b und 69b des Konusrings 65b lassen sich auf diese Weise einfacher herstellen.

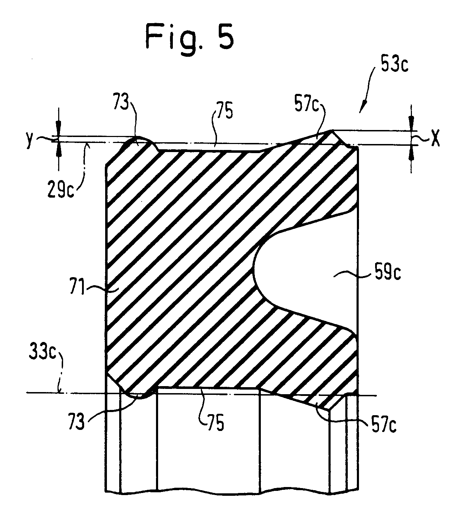

Fig. 5 zeigt einen Axiallängsschnitt durch einen Nutring 53c für einen Nehmerzylinder gemäß Fig. 2, der in der Endstellung des Ringkolbens wirksame Konusflächen an den Zylinderwänden oder einem zusätzlich in den Druckraum ragenden Konusring erübrigt. Fig. 5 zeigt hierbei den Nut-Dichtring 53c im nicht eingebauten, unbelasteten Zustand. Der Nut-Dichtring 53c besteht, wie auch die Nut-Dichtringe der vorstehend erläuterten Ausführungsbeispiele integral aus gummielastischem Material und hat einen Grundkörper 71, von dem aus der dem Ringkolben abgewandten Seite ringförmige Dichtlippen 57c abstehen. Radial zwischen den Dichtlippen 57c ist eine vom Ringkolben wegweisend offene Ringnut 59c vorgesehen, deren axiale Erstreckung ungefähr der Erstreckung der Dichtlippen 57c entspricht und die die Elastizität der Dichtlippen 57c bestimmt. Dem Ringkolben benachbart ist der Grundkörper 71 sowohl auf seinem Außenumfang als auch seinem Innenumfang mit je einem Dichtwulst 73 versehen, der im Axiallängsschnitt eine kreissektorförmige Querschnittskontur hat. Wie der in Fig. 5 durch strichpunktierte Linien angedeutete Verlauf der äußeren Zylinderwand 29c und der inneren Zylinderwand 33c zeigt, überdecken die Ringwulste 73 die Zylinderwände 29c, 33c nur geringfügig um ein Radiusdifferenzmaß y, in jedem Fall jedoch um ein kleineres Radiusdifferenzmaß als die jeweils an derselben Zylinderwand anliegende Dichtlippe 57c, deren Überdeckung bei X eingezeichnet ist. Das Material des Nut-Dichtrings und die Form der Ringnut 59c ist so gewählt, daß die Dichtlippen 57c im eingebauten Zustand mit vergleichsweise geringer Vorspannung an den Zylinderwänden 29c bzw. 33c anliegen. Die vergleichsweise kleine Überdeckung der Dichtwulste 73 dichtet den Nut-Dichtring soweit ab, daß eine Unterdruckentlastung der Dichtlippen 57c beim Befüllen verhindert wird. Die Form der Dichtwulste 73 sorgt in diesem Zusammenhang mit dafür, daß sich die Reibkraft nur geringfügig im Betrieb erhöht. Axial zwischen den Dichtwulsten 73 einerseits und den Dichtlippen 57c andererseits bildet der Grundkörper 71 radiale Spalte 75 zwischen sich und der jeweils benachbarten Zylinderwand, die im eingebauten Zustand mit Schmiermittel gefüllt sind. Das Schmiermittel senkt einerseits die Reibkraft bei einer Axialverschiebung und verbessert andererseits die Dichtwirkung des Nut-Dichtrings.

## Patentansprüche

1. Nehmerzylinder für eine hydraulische Betätigungsanlage einer Kraftfahrzeug-Reibungskupplung, umfassend
- einen Ringzylinder (27, 31) mit einer äußeren Zylinderwand (29), einer zur äußeren Zylinderwand (29) koaxialen inneren Zylinderwand (33) und einer die Zylinderwände (29, 33) an einem Ende dicht verbindenden Stirnwand (35),
- einen zwischen der äußeren (29) und der inneren (33) Zylinderwand axial verschiebbar angeordneten Ringkolben (45),
- einen mit radial elastischen, eine Ringnut (59) zwischen sich einschließenden Dichtlippen (57) sowohl an der äußeren (29) als auch an der inneren (33) Zylinderwand anliegenden, zusammen mit dem Ringkolben (45) axial verschiebbaren Nut-Dichtring (53) an dem der Stirnwand (35) zugekehrten Ende des Ringkolbens (45), der zusammen mit den Zylinderwänden (29, 33) und der Stirnwand (35) einen Hydraulik-Druckraum (37) einschließt und
- einen in den Hydraulik-Druckraum (37) mündenden Druckmittelanschluß (39),
**dadurch gekennzeichnet,**
daß der Ringzylinder (27, 31) im Bereich einer der Endstellungen des Ringkolbens (45) mit ringförmigen Anlageflächen (61, 63; 67, 69) versehen ist, an welchen die Dichtlippen (57) in der Endstellung des Ringkolbens (45) anliegen und die den Radialdruck mit dem die Dichtlippen (57) an den Zylinderwänden (29, 33) anliegen zur Erhöhung der Dichtwirkung der Dichtlippen (57) erhöhen.

2. Nehmerzylinder nach Anspruch 1,
**dadurch gekennzeichnet,**
daß die ringförmigen Anlageflächen als Konusflächen (61, 63; 67, 69) ausgebildet sind.

3. Nehmerzylinder nach Anspruch 2,
**dadurch gekennzeichnet,**
daß die äußere Zylinderwand (29) in eine zur Endstellung hin sich verjüngende Konusfläche (61) und die innere Zylinderwand (33) in eine zur Endstellung hin sich erweiternde Konusfläche (63) übergeht.

4. Nehmerzylinder nach Anspruch 3,
**dadurch gekennzeichnet,**
daß die Konusflächen (61, 63) im Bereich der Stirnwand (35) des Ringzylinders (27, 31) vorgesehen sind.

5. Nehmerzylinder nach Anspruch 2,
**dadurch gekennzeichnet,**
daß der Nut-Dichtring (53a; 53b) eine zur Stirnwand (35a, 35b) des Ringzylinders (27a, 31a; 27b, 31b) offene Ringnut (59a; 59b) zwischen seinen Dichtlippen (57a; 57b) aufweist und im Bereich der Stirnwand (35a; 35b) ein in der Endstellung des Ringkolbens (45a; 45b) mit seinen Konusflächen in die Ringnut (59a; 59b) eingreifender Konusring (65; 65b) angeordnet ist.

6. Nehmerzylinder nach Anspruch 5,
**dadurch gekennzeichnet,**
daß der Konusring (65b) als separat von den Zylinderwänden (29b, 33b) und der Stirnwand (35b) hergestelltes, in den Ringzylinder eingesetztes Bauteil ausgebildet ist.

7. Nehmerzylinder für eine hydraulische Betätigungsanlage einer Kraftfahrzeug-Reibungskupplung, umfassend
- einen Ringzylinder (27, 31) mit einer äußeren Zylinderwand (29c), einer zur äußeren Zylinderwand (29c) koaxialen inneren Zylinderwand (33) und einer die Zylinderwände (29c, 33c) an einem Ende dicht verbindenden Stirnwand (35),
- einen zwischen der äußeren (29c) und der inneren (33c) Zylinderwand axial verschiebbar angeordneten Ringkolben (45),
- einen mit radial elastischen, eine Ringnut (59c) zwischen sich einschließenden Dichtlippen (57c) sowohl an der äußeren (29c) als auch an der inneren (33c) Zylinderwand anliegenden, zusammen mit dem Ringkolben (45) axial verschiebbaren Nut-Dichtring (53c) an dem der Stirnwand (35) zugekehrten Ende des Ringkolbens (45), der zusammen mit den Zylinderwänden (29c, 33c) und der Stirnwand (35) einen Hydraulik-Druckraum (37) einschließt und
- einen in den Hydraulik-Druckraum (37) mündenden Druckmittelanschluß (39),
**dadurch gekennzeichnet,**
daß der Nut-Dichtring (53c) einen ringförmigen Grundkörper (71) aufweist, von dem die Dichtlippen (57c) durch eine Ringnut (59c) voneinander getrennt zur Stirnwand des Ringzylinders abstehen, daß zur Erhöhung der Dichtwirkung der Dichtlippen (57c) bei an dem Hydraulik-Druckraum (37) anliegendem Unterdruck zusätzlich zu den Dichtlippen (57c) vom Außenumfang und vom Innenumfang des Grundkörpers (71) auf der von der Stirnwand des Ringzylinders abgewandten Seite je ein ringförmiger Dichtwulst (73) radial zu der äußeren (29c) bzw. der inneren (33c) Zylinderwand absteht und der Grundkörper (71) axial zwischen den Dichtwulsten (73) und den Dichtlippen (57) Ringspalte (75) zwischen sich und den Zylinderwänden (29c, 33c) bildet.

8. Nehmerzylinder nach Anspruch 7,
**dadurch gekennzeichnet,**
daß die Dichtwulste (73), gesehen in einer Axiallängsschnittebene des Nut-Dichtrings eine kreissektorförmige Querschnittskontur haben.

9. Nehmerzylinder nach Anspruch 8,
**dadurch gekennzeichnet,**
daß der Durchmesser jedes Dichwulsts (73) bei nicht in den Ringzylinder eingebautem Nut-Dichtring jeweils eine kleinere radiale Überdeckung mit dem Durchmesser der zur Anlage bestimmten Zylinderwand (29c, 33c) hat als der Durchmesser der zur Anlage an derselben Zylinderwand (29c, 33c) bestimmten Dichtlippe (57c).

10. Nehmerzylinder nach einem der Ansprüche 7 bis 9,
**dadurch gekennzeichnet,**
daß die Ringspalte (75) mit Schmiermittel gefüllt sind.

11. Nehmerzylinder nach einem der Ansprüche 2 bis 10,
**dadurch gekennzeichnet,**
daß der Nut-Dichtring (53; 53a, 53b) axial lose am Ringkolben (45; 45a, 45b) abgestützt ist und die Anlageflächen (61, 63; 67, 69) im Bereich der Stirnwand (35, 35a; 35b) des Ringzylinders vorgesehen sind.

## Claims

1. Slave cylinder for a hydraulic actuating system of a motor vehicle friction clutch, comprising
- an annular cylinder (27, 31) with an outer cylinder wall (29), an inner cylinder wall (33) coaxial with the outer cylinder wall (29) and an end wall (35) hermetically connecting the cylinder walls (29, 33) at one end,
- an annular piston (45) arranged to slide axially between the outer cylinder wall (29) and the inner cylinder wall (33),
- a grooved sealing ring (53) able to slide axially together with the annular piston (45) and bearing by radially resilient sealing lips (57) enclosing an annular groove (59) therebetween, both against the outer cylinder wall (29) as well as against the inner cylinder wall (33), at the end of the annular piston (45) facing the end wall (35), which piston together with the cylinder walls (29, 33) and the end wall (35) encloses a hydraulic pressure chamber (37) and
- a pressure medium connection (39) opening into the hydraulic pressure chamber (37),
characterised in that in the region of one of the end positions of the annular piston (45), the annular cylinder (27, 31) is provided with annular bearing surfaces (61, 63; 67, 69), against which the sealing lips (57) bear in the end position of the annular piston (45) and which increase the radial pressure by which the sealing lips (57) bear against the cylinder walls (29, 33) in order to increase the sealing action of the sealing lips (57).

2. Slave cylinder according to Claim 1, characterised in that the annular bearing surfaces are constructed as conical surfaces (61, 63; 67, 69).

3. Slave cylinder according to Claim 2, characterised in that the outer cylinder wall (29) passes into a conical surface (61) tapering towards the end position and the inner cylinder wall (33) passes into a conical surface (63) widening out towards the end position.

4. Slave cylinder according to Claim 3, characterised in that the conical surfaces (61, 63) are provided in the region of the end wall (35) of the annular cylinder (27, 31).

5. Slave cylinder according to Claim 2, characterised in that the grooved sealing ring (53a; 53b) comprises an annular groove (59a; 59b) open towards the end wall (35a, 35b) of the annular cylinder (27a, 31a; 27b, 31b), between its sealing lips (57a; 57b) and located in the region of the end wall (35a; 35b) is a conical ring (65; 65b) engaging in the annular groove (59a; 59b) by its conical surfaces, in the end position of the annular piston (45a; 45b).

6. Slave cylinder according to Claim 5, characterised in that the conical ring (65b) is constructed as a component produced separately from the cylinder walls (29b, 33b) and the end wall (35b) and inserted in the annular cylinder.

7. Slave cylinder for a hydraulic actuating system of a motor vehicle friction clutch, comprising
- an annular cylinder (27, 31) with an outer cylinder wall (29c), an inner cylinder wall (33) coaxial with the outer cylinder wall (29c) and an end wall (35) hermetically connecting the cylinder walls (29c, 33c) at one end,
- an annular piston (45) arranged to slide axially between the outer cylinder wall (29c) and the inner cylinder wall (33c),
- a grooved sealing ring (53c) able to slide axially together with the annular piston (45) and bearing by radially resilient sealing lips (57c) enclosing an annular groove (59c) therebetween, both against the outer cylinder wall (29c) as well as against the inner cylinder wall (33c), at the end of the annular piston (45) facing the end wall (35), which piston together with the cylinder walls (29c, 33c) and the end wall (35) encloses a hydraulic pressure chamber (37) and
- a pressure medium connection (39) opening into the hydraulic pressure chamber (37),
characterised in that the grooved sealing ring (53c) has an annular basic member (71), from which the sealing lips (57c) project through an annular groove (59c), separately from each other, towards the end wall of the annular cylinder, that in order to increase the sealing action of the sealing lips (57c) in the case of reduced pressure applied to the hydraulic pressure chamber (37), in addition to the sealing lips (57c), projecting from the outer periphery and from the inner periphery of the basic member (71), on the side remote from the end wall of the annular cylinder, is an annular sealing bead (73) respectively radially towards the outer cylinder wall (29c) or the inner cylinder wall (33c) and axially between the sealing beads (73) and the sealing lips (57), the basic member (71) forms annular gaps (75) between itself and the cylinder walls (29c, 33c).

8. Slave cylinder according to Claim 7, characterised in that seen in an axial longitudinal sectional plane of the grooved sealing ring, the sealing beads (73) have a cross-sectional contour in the shape of a circular sector.

9. Slave cylinder according to Claim 8, characterised in that when the grooved sealing ring is not fitted in the annular cylinder, the diameter of each sealing bead (73) has a smaller radial overlap with the diameter of the cylinder wall (29c, 33c) intended for abutment than the diameter of the sealing lip (57c) intended for abutment against the same cylinder wall (29c, 33c).

10. Slave cylinder according to one of Claims 7 to 9, characterised in that the annular gaps (75) are filled with lubricant.

11. Slave cylinder according to one of Claims 2 to 10, characterised in that the grooved sealing ring (53; 53a, 53b) is supported axially loosely on the annular piston (45; 45a, 45b) and the bearing surfaces (61, 63; 67, 69) are provided in the region of the end wall (35, 35a; 35b) of the annular cylinder.

## Revendications

1. Cylindre récepteur d'un dispositif d'actionnement hydraulique d'un embrayage à friction de véhicule automobile, comportant
- un cylindre annulaire (27, 31) avec une paroi cylindrique extérieure (29), une paroi cylindrique intérieure (33) coaxiale à la paroi cylindrique extérieure (29) et une paroi frontale (35) reliant hermétiquement les parois cylindriques (29, 33) à une extrémité,
- un piston annulaire (45) monté coulissant axialement entre la paroi cylindrique extérieure (29) et la paroi cylindrique intérieure (33),
- une bague d'étanchéité à rainure (53) avec des lèvres d'étanchéité (57) élastiques radialement, délimitant entre elles une rainure annulaire (59), s'appliquant contre la paroi cylindrique extérieure (29) ainsi que contre la paroi cylindrique intérieure (33), à l'extrémité du piston annulaire (45), tournée vers la paroi frontale (35), laquelle bague d'étanchéité enferme avec les parois cylindriques (29, 33) et la paroi frontale (35) un compartiment de pression hydraulique (37) et
- un raccord de fluide sous pression (39) débouchant dans le compartiment de pression hydraulique (37),
caractérisé en ce que le cylindre annulaire (27, 31) est pourvu dans la zone de l'une des positions de fin de course du piston annulaire (45), de surfaces d'application (61, 63 ; 67, 69) annulaires, contre lesquelles s'appliquent les lèvres d'étanchéité (57) dans la position de fin de course du piston annulaire (45) et qui augmentent la pression radiale avec laquelle les lèvres d'étanchéité (57) s'appliquent contre les parois cylindriques (29, 33), pour accroître l'effet d'étanchéité des lèvres d'étanchéité (57).

2. Cylindre récepteur selon la revendication 1, caractérisé en ce que les surfaces d'application annulaires sont des surfaces coniques (61, 63 ; 67, 69).

3. Cylindre récepteur selon la revendication 2, caractérisé en ce que la paroi cylindrique extérieure (29) se prolonge par une surface conique (61), se rétrécissant vers la position de fin de course et la paroi cylindrique intérieure (33) se prolonge par une surface conique (63) s'élargissant vers la position de fin de course.

4. Cylindre récepteur selon la revendication 3, caractérisé en ce que les surfaces coniques (61, 63) sont prévues dans la zone de la paroi frontale (35) du cylindre annulaire (27, 31).

5. Cylindre récepteur selon la revendication 2, caractérisé en ce que la bague d'étanchéité à rainure (53a ; 53b) présente une rainure annulaire (59a ; 59b) ouverte vers la paroi frontale (35a, 35b) du cylindre annulaire (27a, 31a ; 27b, 31b), entre ses lèvres d'étanchéité (57a ; 57b) et en ce qu'il est prévu dans la région de la paroi frontale (35a ; 35b), une bague conique (65, 65b) s'engageant, dans la position de fin de course du piston annulaire (45a ; 45b), dans la rainure annulaire (59a ; 59b), par ses surfaces coniques.

6. Cylindre récepteur selon la revendication 5, caractérisé en ce que la bague conique (65b) est un composant fabriqué séparément des parois cylindriques (29b, 33b) et de la paroi frontale (35b), et inséré dans le cylindre annulaire.

7. Cylindre récepteur d'un dispositif d'actionnement hydraulique d'un embrayage à friction de véhicule automobile, comportant
- un cylindre annulaire (27, 31) avec une paroi cylindrique extérieure (29c), une paroi cylindrique intérieure (33c) coaxiale à la paroi cylindrique extérieure (29c) et une paroi frontale (35) reliant hermétiquement les parois cylindriques (29c, 33c) à une extrémité,
- un piston annulaire (45) monté coulissant axialement entre la paroi cylindrique extérieure (29c) et la paroi cylindrique intérieure (33c),
- une bague d'étanchéité à rainure (53c) avec des lèvres d'étanchéité (57c) élastiques radialement, délimitant entre elles une rainure annulaire (59c), s'appliquant contre la paroi cylindrique extérieure (29c) ainsi que contre la paroi cylindrique intérieure (33c), à l'extrémité du piston annulaire (45), tournée vers la paroi frontale (35), laquelle bague d'étanchéité enferme avec les parois cylindriques (29c, 33c) et la paroi frontale (35) un compartiment de pression hydraulique (37) et
- un raccord de fluide sous pression (39) débouchant dans le compartiment de pression hydraulique (37),
caractérisé en ce que la bague d'étanchéité à rainure (53c) comporte un corps de base (71) annulaire, duquel les lèvres d'étanchéité (57c), séparées l'une de l'autre par une rainure annulaire (59c), font saillie en direction de la paroi frontale du cylindre annulaire, en ce que, pour augmenter l'effet d'étanchéité des lèvres d'étanchéité (57c), lorsqu'une dépression s'applique au compartiment de pression hydraulique (37), en plus des lèvres d'étanchéité (57c), un bourrelet d'étanchéité (73) annulaire fait saillie radialement vers la paroi cylindrique extérieure (29c) ou la paroi cylindrique intérieure (33c), à partir du pourtour extérieur et du pourtour intérieur du corps de base (71), sur le côté tourné à l'opposé de la paroi frontale du cylindre annulaire et le corps de base (71) forme axialement entre les bourrelets d'étanchéité (73) et les lèvres d'étanchéité (57), des interstices annulaires (75), entre lui-même et les parois cylindriques (29c, 33c).

8. Cylindre récepteur selon la revendication 7, caractérisé en ce que les bourrelets d'étanchéité (73), vus dans un plan de coupe longitudinal axial de la bague d'étanchéité à rainure, présentent une section transversale dont le contour est en forme de secteur de cercle.

9. Cylindre récepteur selon la revendication 8, caractérisé en ce que, lorsque la bague d'étanchéité à rainure n'est pas montée dans le cylindre annulaire, le diamètre de chaque bourrelet d'étanchéité (73) présente un recouvrement radial du diamètre de la paroi cylindrique (29c, 33c), destinée à son application, inférieur au diamètre de la lèvre d'étanchéité (57c) destinée à s'appliquer contre cette même paroi cylindrique (29c, 33c).

10. Cylindre récepteur selon l'une des revendications 7 à 9, caractérisé en ce que les interstices annulaires (75) sont remplis de lubrifiant.

11. Cylindre récepteur selon l'une des revendications 2 à 10, caractérisé en ce que la bague d'étanchéité à rainure (53 ; 53a, 53b) est appliquée axialement, librement, contre le piston annulaire (45 ; 45a, 45b) et les surfaces d'application (61, 63 ; 67, 69) sont prévues dans la région de la paroi frontale (35, 35a ; 35b) du cylindre annulaire.
